(19) Europäisches Patentamt
European Patent Office
Office européen des brevets

(11) **EP 4 779 998 A1**

(12) **EUROPEAN PATENT APPLICATION**
published in accordance with Art. 153(4) EPC

(43) Date of publication:
**22.07.2026 Bulletin 2026/30**

(21) Application number: **24864419.7**

(22) Date of filing: **22.08.2024**

(51) International Patent Classification (IPC):
**H04N 21/439** (2011.01)

(52) Cooperative Patent Classification (CPC):
**G10L 15/04; G10L 15/08; G10L 15/26;**
**H04N 21/435; H04N 21/439; H04N 21/488**

(86) International application number:
**PCT/CN2024/114000**

(87) International publication number:
**WO 2025/055696 (20.03.2025 Gazette 2025/12)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **13.09.2023 CN 202311183290**

(71) Applicants:
• **Beijing Zitiao Network Technology Co., Ltd.**
**Beijing 100190 (CN)**

• **Lemon Inc.**
**Grand Cayman, KY1-1205 (KY)**

(72) Inventors:
• **LIU, Lu**
**Beijing 100028 (CN)**
• **XIA, Rui**
**Los Angeles California 90066 (US)**
• **YE, Shunping**
**Beijing 100028 (CN)**

(74) Representative: **Isarpatent**
**Patent- und Rechtsanwälte Part G mbB**
**Friedrichstrasse 31**
**80801 München (DE)**

(54) **TRANSCRIPT GENERATION METHOD, SYSTEM, DEVICE, AND STORAGE MEDIUM**

(57) The present disclosure relates to the field of computer technologies and discloses a transcript generation method, a system, a device, and a storage medium. The transcript generation method includes: performing audio recognition on a video file to obtain an audio recognition result, and recognizing a subtitle of the video file to obtain a subtitle recognition result; adding a segmentation punctuation in the audio recognition result, and obtaining an audio substring segmented by a target segmentation punctuation; for any audio substring, obtaining, based on a timestamp of the audio substring, a subtitle substring located in the same time period as the audio substring in the subtitle recognition result, and correcting the audio substring based on the subtitle substring; and outputting a corrected audio recognition result as a video transcript of the video file.

Fig. 1

| S11 |
| --- |
| Perform audio recognition on a video file to obtain an audio recognition result, and recognize a subtitle of the video file to obtain a subtitle recognition result |

| S12 |
| --- |
| Add a segmentation punctuation in the audio recognition result, and obtain an audio substring segmented by a target segmentation punctuation |

| S13 |
| --- |
| For any audio substring, obtain, based on a timestamp of the audio substring, a subtitle substring located in a same time period as the audio substring in the subtitle recognition result, and correct the audio substring based on the subtitle substring |

| S14 |
| --- |
| Output a corrected audio recognition result as a video transcript of the video file |

## Description

The present application claims priority to Chinese Patent Application No. 202311183290.3, filed with China National Intellectual Property Administration on September 13, 2023 and entitled " TRANSCRIPT GENERATION METHOD, SYSTEM, DEVICE AND STORAGE MEDIUM", which is incorporated herein by reference in its entirety.

## FIELD

The present disclosure relates to the field of computer technologies, and in particular, to a transcript generation method, a system, a device, and a storage medium.

## BACKGROUND

In some application scenarios, it is necessary to output a video transcript corresponding to a video file. The video transcript is a text document corresponding to the audio of the video file. At present, the related technology uses automatic speech recognition technology to recognize the audio of the video file to obtain the video transcript. However, the automatic speech recognition technology has its shortcomings, such as recognition errors of some proper nouns often occur.

In view of this, there is an urgent need for a method for improving the accuracy of a video transcript.

## SUMMARY

In view of this, embodiments of the present disclosure provide a transcript generation method, a transcript generation system, an electronic device, and a computer-readable storage medium, which may improve the accuracy of a video transcript.

In one aspect, the present disclosure provides a transcript generation method, including:

performing audio recognition on a video file to obtain an audio recognition result, and recognizing a subtitle of the video file to obtain a subtitle recognition result;

adding a segmentation punctuation in the audio recognition result, and obtaining an audio substring segmented by a target segmentation punctuation;

for any audio substrings, obtaining, based on a timestamp of the audio substring, a subtitle substring located in a same time period as the audio substring in the subtitle recognition result, and correcting the audio substring based on the subtitle substring; and

outputting a corrected audio recognition result as a video transcript of the video file.

In another aspect, the present disclosure further provides a transcript generation system, including:

a recognition module, configured to perform audio recognition on a video file to obtain an audio recognition result, and recognize a subtitle of the video file to obtain a subtitle recognition result;

a segmentation module, configured to add a segmentation punctuation in the audio recognition result, and obtain an audio substring segmented by a target segmentation punctuation;

a correction module, configured to, for any audio substring, obtain, based on a timestamp of the audio substring, a subtitle substring located in a same time period as the audio substring in the subtitle recognition result, and correct the audio substring based on the subtitle substring; and

a transcript output module, configured to output a corrected audio recognition result as a video transcript of the video file.

In another aspect, the present disclosure further provides a computer-readable storage medium, wherein the computer-readable storage medium is configured to store a computer program, and when the computer program is executed by a processor, the foregoing method is implemented.

In another aspect, the present disclosure further provides an electronic device, including a processor and a memory, wherein the memory is configured to store a computer program, and when the computer program is executed by the processor, the foregoing method is implemented.

In the technical solutions of some embodiments of the present disclosure, the segmentation punctuation is added in the audio recognition result of the video file, and the audio substring segmented by the target segmentation punctuation is obtained. The subtitle substring located in the same time period as the audio substring is obtained in the subtitle recognition result of the video file based on the timestamp of the audio substring, and the audio substring is corrected based on the subtitle substring. Since the text in the subtitle substring has a high accuracy, the subtitle substring may be used to correct the wrongly recognized homophone, proper noun, idiom, name, etc. in the speech substring, thereby improving the accuracy of the generated video transcript.

BRIEF DESCRIPTION OF THE DRAWINGS

Features and advantages of the present disclosure will be understood more clearly by referring to the drawings, which are schematic and should not be construed as limiting the present disclosure in any way. In the drawings:

Fig. 1 shows a schematic flowchart of a transcript generation method provided by an embodiment of the present disclosure;

Fig. 2 shows a schematic diagram of a playing interface of a video file provided by an embodiment of the present disclosure;

Fig. 3 shows a schematic diagram of frame extraction scanning provided by an embodiment of the present disclosure;

Fig. 4 shows a schematic flowchart of obtaining a subtitle substring provided by an embodiment of the present disclosure;

Fig. 5 shows a schematic block diagram of a transcript generation system provided by an embodiment of the present disclosure; and

Fig. 6 shows a schematic diagram of an electronic device provided by an embodiment of the present disclosure.

DETAILED DESCRIPTION OF EMBODIMENTS

In order to make the objectives, technical solutions and advantages of embodiments of the present disclosure clearer, the technical solutions in the embodiments of the present disclosure will be described clearly and comprehensively with reference to the drawings in the embodiments of the present disclosure. Obviously, the described embodiments are part of the embodiments of the present disclosure, rather than all of them. Based on the embodiments in the present disclosure, all other embodiments obtained by those skilled in the art without paying creative effort belong to the protection scope of the present disclosure.

Before elaborating on the technical solutions of the present disclosure, related concepts will be explained first.

Automatic speech recognition (Automatic Speech Recognition, ASR), also known as speech recognition, computer speech recognition, and speech-to-text, refers to a technology that converts human speech into text through an application program.

Optical character recognition (Optical Character Recognition, OCR) refers to a technology that performs recognition processing on an image file of a text material to obtain text and layout information, or a technology that recognizes text in an image file and returns the text.

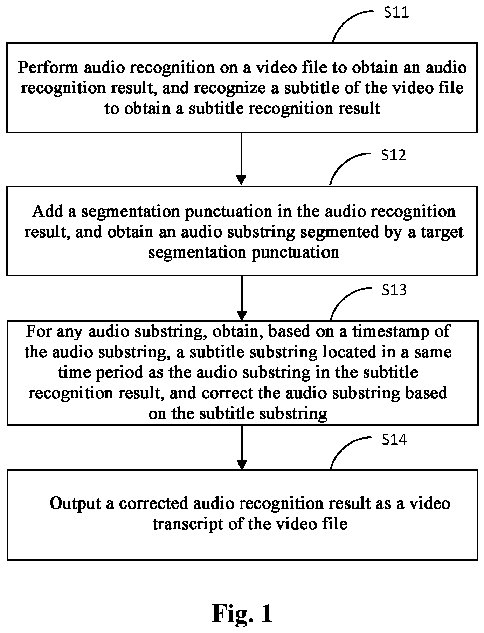

Based on the above description, the present disclosure provides a transcript generation method, which may improve the accuracy of a video transcript. The transcript generation method may be applied to an electronic device. The electronic device includes but is not limited to a tablet computer, a laptop computer, a desktop computer, a server, etc. Please refer to Fig. 1, which is a schematic flowchart of a transcript generation method provided by an embodiment of the present disclosure. In Fig. 1, the transcript generation method includes the following steps.

Step S11, audio recognition is performed on a video file to obtain an audio recognition result, and a subtitle of the video file is recognized to obtain a subtitle recognition result.

Specifically, the audio recognition result refers to a text obtained after recognizing the audio of the video file based on the automatic speech recognition technology. In the audio recognition result, there may be an accurate causal relationship and logic between characters, but recognition errors of homophone, proper noun, idiom, name, etc. easily occur. For example, taking an audio recognition result "Welcome to my direct doctoral room" as an example, in this audio recognition result, there is an accurate causal relationship and logic between characters. However, the " direct doctoral room" in the result should be a " live streaming room ", that is, the audio recognition result has a recognition error of a proper noun.

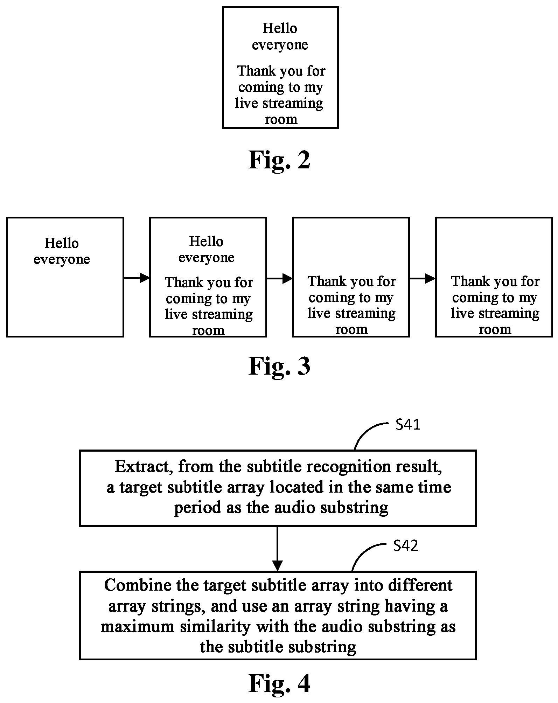

The subtitle recognition result refers to a text obtained after recognizing the subtitle displayed in the video file based on the optical character recognition technology. The subtitle recognition result may include subtitle arrays recognized from the video file at multiple time points. One subtitle array may be one line or one column of subtitles displayed in the playing interface of the video file. For example, please refer to Fig. 2, which is a schematic diagram of a playing interface of a video file provided by an embodiment of the present disclosure. In Fig. 2, one line of subtitle may be used as one subtitle array, that is, "Hello everyone", "Thank you for coming", and "My live streaming room" are respectively used as one subtitle array.

When recognizing the subtitle of the video file, frame extraction scanning may be performed on the playing interface of the video file to obtain multiple image frames. After recognizing the subtitle in the image frame, combining multiple obtained subtitle arrays may obtain the subtitle recognition result. Based on the optical character recognition technology, the subtitle in the image frame may be accurately recognized, thus preventing recognition errors of homophone, proper noun, idiom, name, etc. However, the subtitle recognition result has a large amount of redundant information and no segmentation punctuation, resulting in no accurate causal relationship and logic between characters. Therefore, the subtitle recognition result cannot be directly used as the video transcript of the video file. For example, it is assumed that the playing interface of the video file is scanned every 0.5 seconds (i.e., frame extraction scanning). Please refer to Fig. 3 in combination, which is a schematic diagram of frame extraction scanning provided by an embodiment of the present disclosure. In Fig. 3, image frames of a video file at the 0.5th second, the 1st second, the 1.5th second and the 2nd second are exemplarily shown. In the direction from left to right, in the image frame at the 0.5th second, "Hello everyone" may be recognized; in the image frame at the 1st second, "Hello everyone", "Thank you for coming", and "My live streaming room" may be recognized; in the image frames at the 1.5th second and the 2nd second, "Thank you for coming" and "My live streaming room" may be recognized. Combining the recognition results of the four image frames is: "Hello everyone", "Hello everyone", "Thank you for coming", "My live streaming room", "Thank you for coming", "My live streaming room", "Thank you for coming", "My live streaming room". Obviously, this recognition result cannot be directly used as the video transcript of the video file.

Through the above analysis of the advantages and disadvantages of the audio recognition result and the subtitle recognition result, it may be understood that correcting the causal relationship and logic of the subtitle recognition result based on the causal relationship and logic of the audio recognition result, or correcting recognition errors of the homophone, proper noun, idiom, name, etc. in the audio recognition result based on the subtitle array in the subtitle recognition result may improve the accuracy of the video transcript. This will be described in turn through steps S12 to S14 below.

Step S12, a segmentation punctuation in the audio recognition result is added, and an audio substring segmented is obtained by a target segmentation punctuation.

The segmentation punctuation may be a symbol that marks the video recognition result based on the length of the pause, intonation changes, etc. The segmentation punctuation includes but is not limited to a comma, a period, a question mark, an exclamation point, etc. The audio recognition result may be input into a trained segmentation model, and the segmentation model adds the segmentation punctuation in the audio recognition result.

In this embodiment, the target segmentation punctuation may be a comma. That is, in the audio recognition result, the audio substring is a substring between two adjacent commas.

Step S13, for any audio substring, a subtitle substring located in a same time period as the audio substring in the subtitle recognition result is obtained based on a timestamp of the audio substring, and the audio substring is corrected based on the subtitle substring.

The subtitle substring may be a string extracted from the subtitle recognition result and eliminating redundant information. Please refer to Fig. 4 in combination, which is a schematic flowchart of obtaining a subtitle substring provided by an embodiment of the present disclosure. In Fig. 4, the process of recognizing the subtitle substring includes the following steps.

Step S41, a target subtitle array located in the same time period as the audio substring is extracted from the subtitle recognition result.

Specifically, in the audio substring, each character may have a timestamp. The timestamp of the character represents a time point when the character is played in the video file. For example, taking "Welcome to my live streaming room" as an example, it is assumed that in the video file, the character "Wel-" is played at the 1st second, and the character "-come" is played at the 1.3th second, then the timestamp of the character "Wel-" is 1 second, and the timestamp of the character "-come" is 1.3 seconds.

Similarly, in the subtitle recognition result, each subtitle array may also have a timestamp. The timestamp of the subtitle array refers to a time point when the image frame wherein the subtitle array is located is played in the video file. For example, taking Fig. 3 as an example, it is assumed that in the video file, the first image frame from the left is played at the 1st second, and the second image frame from the left is played at the 2nd second, then in the subtitle recognition result "Hello everyone", "Hello everyone", "Thank you for coming", "My live streaming room", the timestamp of the first subtitle array "Hello everyone" is 1, and the timestamps of the second subtitle array "Hello everyone", the third subtitle array "Thank you for coming", and the fourth subtitle array "My live streaming room" are 2.

In the audio substring, characters may be sorted and stored based on the sequence in which they are recognized, and in the subtitle recognition result, subtitle arrays may be sorted based on the sequence in which they are recognized.

In combination with the above examples of the timestamps of the audio substring and the audio recognition result, it may be understood that because the timestamp of each subtitle array in the audio substring is determined based on the time point when the image frame is played, and the timestamp of each character in the audio substring is determined based on the time point when the character is played, the timestamp accuracy of the subtitle array is lower than the timestamp accuracy of the character. For example, the timestamp of the character may be accurate to milliseconds, but the timestamp of the subtitle array may only be accurate to seconds. In view of this, the target subtitle array located in the same time period as the audio substring may be extracted from the subtitle recognition result based on the timestamp of each character in the audio substring, so as to improve the accuracy of the found target subtitle array.

Specifically, the timestamp of the audio substring may include a minimum timestamp and a maximum timestamp. According to the sequence in which the characters in the audio substring are played, the minimum timestamp is the timestamp of the start character in the audio substring, and the maximum timestamp is the timestamp of the end character in the audio substring. In the subtitle recognition result, the subtitle array whose timestamp is between the minimum timestamp and the maximum timestamp is the target subtitle array.

In this embodiment, in order to enable the audio substring to be completely located in the target subtitle array in the same time period, the above the target subtitle array located in the same time period as the audio substring being extracted from the subtitle recognition result may include:

a first timestamp less than the minimum timestamp and a second timestamp greater than the maximum timestamp are determined; and

a subtitle array with a timestamp between the first timestamp and the second timestamp is extracted from the subtitle recognition result, and the subtitle array is used as the target subtitle array.

Briefly, it is to expand the time range of the audio substring, and search for the target subtitle array in the expanded time range. For example, it is assumed that the timestamp accuracy of each character in the audio recognition result is millisecond, the timestamp accuracy of each character in the subtitle recognition result is second, the minimum timestamp of the audio substring is 2.225 seconds, and the maximum timestamp of the audio substring is 4.450 seconds. If the target subtitle array is searched for based on the minimum timestamp and the maximum timestamp, it is to search for the subtitle array whose timestamp is 2 seconds, 4 seconds, and between 2 seconds and 4 seconds. After expanding the time range of the audio substring, the first timestamp less than the minimum timestamp may be determined as 1.5 seconds, and the second timestamp greater than the maximum timestamp may be determined as 5.5 seconds. Searching for the target subtitle array based on the first timestamp and the second timestamp is to search for the subtitle array whose timestamp is 1 second, 5 seconds, and between 1 second and 5 seconds. In this way, it may be ensured that the audio substring is completely located in the target subtitle array, so as to improve the subsequent correction accuracy.

Step S42, the target subtitle array is combined into different array strings, and an array string having a maximum similarity with the audio substring is used as the subtitle substring.

Specifically, when combining the target subtitle array into the array string, the target subtitle array may be sequentially accumulated based on the sequence in which each target subtitle array is recognized in the video file, to obtain array strings of different combinations. The number of obtained array strings is n*(n+1)/2, wherein n is the number of target subtitle arrays. For example, according to the sequence in which they are recognized, the target subtitle arrays are: "Thank you", "for coming", and "to my live streaming room". The combined array strings may include:

"Thank you"

"Thank you for coming"

"Thank you for coming to my live streaming room"

"For coming"

"For coming to my live streaming room"

"My live streaming room"

It is assumed that the audio substring is "Thank you for coming to my live streaming room". The similarity between the audio substring and each of the above array strings may be calculated separately, and then the array string having the maximum similarity with the audio substring may be used as the subtitle substring. For example, in the array strings obtained by the above combination, the array string "Thank you for coming to my live streaming room" has the maximum similarity with the audio substring "Thank you for coming to my live streaming room", then the array string " Thank you for coming to my live streaming room" is used as the subtitle substring.

Specifically, in this embodiment, the subtitle substring having the maximum similarity with the audio substring is searched for in the array string may include:

similarity scores between the audio substring and each of the array strings are calculated based on a length difference and a character difference between the audio substring and each of the array strings; and

an array string having a highest similarity score with the audio substring is used as the subtitle substring.

For any array string, the smaller the length difference and the character difference between the audio substring and the array string, the higher the similarity score. The array string having the highest similarity score with the audio substring is the subtitle substring having the maximum similarity with the audio substring.

Further, for any array string, the similarity score between the audio substring and the array string is calculated includes:

a length difference score is determined based on the length difference between the audio substring and the array string, and a character similarity score is determined based on the character difference between the audio substring and the array string; and

weighted summation is performed on the length difference score and the character similarity score to obtain the similarity score.

The length difference score represents the length difference between the audio substring and the array string, and the character similarity score represents the character difference between the audio substring and the array string.

The length difference score may be determined based on expression (1):

$$1 - \frac{\text{distance (cand, target)}}{\text{lenth (target)}} \qquad (1)$$

Wherein distance (cand, target) represents the length difference between the audio substring and the array string, cand represents the length of the array string, and lenth (target) represents the length of the audio substring.

The character similarity score may be calculated based on the sw (Smith-Waterman algorithm) algorithm. The character similarity score may be determined based on expression (2):

$$\frac{\text{sw\_string}}{\text{target}} \qquad (2)$$

Wherein sw_string represents the optimal matching sequence between the audio substring and the array string, and target represents the audio substring.

The character similarity score and the length difference score may have their own corresponding weights. The greater the weight, the greater the impact of the corresponding score on the similarity between the two strings. For example, the weight of the character similarity score is 0.4, and the weight of the length difference score is 0.6, indicating that the length difference score has a greater impact on the similarity between the two strings. The formula for weighted summation of the length difference score and the character similarity score may be as shown in expression (3).

$$\text{score} = \text{length\_ratio} * (1 - \frac{\text{distance (cand, target)}}{\text{target}} + \text{match\_ratio} * \frac{\text{sw\_string}}{\text{target}}) \qquad (3)$$

Wherein score represents the similarity score between the audio substring and the array string, length-ratio represents the weight of the length difference score, and match-ratio represents the weight of the character similarity score.

Based on the similarity score, the array string having the maximum similarity with the audio substring may be determined, and the array string may be used as the subtitle substring.

After the subtitle substring is obtained, the audio substring may be corrected based on the subtitle substring.

Specifically, it may be learned based on the related description of step S11 that because the audio substring has an accurate causal relationship and logic, and the text in the subtitle substring is relatively accurate, the text in the subtitle substring may be used to correct the wrongly recognized homophone, proper noun, idiom, name, etc. in the audio substring, so that the corrected audio substring has an accurate causal relationship and logic, while reducing the recognition errors of the homophone, proper noun, idiom, and name, thereby improving the accuracy of the video transcript.

How to correct the audio substring based on the subtitle substring is elaborated in detail below.

In some embodiments, before correcting the audio substring, the following pre-processing operations may be performed on the subtitle substring and the audio substring:

1) a segmentation punctuation is deleted if the subtitle substring and the audio substring include the segmentation punctuation. Specifically, taking the audio substring as an example. The segmentation punctuation refers to a punctuation included in the audio substring and having a smaller segmentation granularity than the segmentation punctuation. For example, in the case that the segmentation punctuation is a comma, the segmentation punctuation may include a comma (i.e., the comma may be located between two adjacent commas).

2) a non-Chinese and non-English character are deleted if the subtitle substring and the audio substring include the non-Chinese and non-English character.

3) a digital character in the subtitle substring is converted. Specifically, the digital character is converted into a text character. For example, the Arabic numeral 123 is converted into one, two, three.

After completing the pre-processing operations, the following correction operations may be performed based on the subtitle substring and the audio substring after the pre-processing operations are completed.

In some embodiments, the audio substring is corrected based on the subtitle substring may include:
if a length of the subtitle substring is the same a length of the audio substring, a front-end character of the subtitle substring has a same pronunciation as a front-end character of the audio substring, and a back-end character of the subtitle substring has a same pronunciation as a back-end character of the audio substring, the audio substring is replaced with the subtitle substring, wherein the same pronunciation means that the similarity between character pronunciations exceeds a pronunciation threshold.

Specifically, the front-end character refers to a first number of characters found in sequence in the direction from the start position of the substring to the end position of the substring; the back-end character refers to a second number of characters found in sequence in the direction from the end position of the substring to the start position of the substring. For example, taking the audio substring "Thank you for coming to my live streaming room" as an example, assuming that the first number is 2 and the second number is 3, the front-end character is "Thank you", and the back-end character is "live streaming room".

In the case that the length of subtitle substring is the same as the length of the audio substring, and the front-end character and the back-end character are the same, it may be considered that there is only a character difference between the two substrings. Moreover, because the characters in the subtitle substring are relatively accurate, the audio substring is directly replaced with the subtitle substring to correct the recognition errors of the homophone, the proper noun, the idiom, the name, etc. in the audio substring. Compared with comparing the characters in the subtitle substring with the characters in the audio substring to find and correct the wrongly recognized characters in the audio substring, the audio substring is directly replaced with the subtitle substring in the present disclosure, which may reduce the workload of comparison.

In some embodiments, the audio substring is corrected based on the subtitle substring may include:
if the length of the subtitle substring is greater than the length of the audio substring, and in the subtitle substring, a first character having a same pronunciation as the front-end character of the audio substring existing, and a second character having a same pronunciation as the back-end character of the audio substring existing, the audio substring is replaced with a string composed of the first character, the second character, and a character between the first character and the second character.

Specifically, in these embodiments, the subtitle substring includes a string that only has a character difference with the audio substring. In this case, it is only necessary to extract the corresponding string from the subtitle substring, and replace the audio substring with the extracted string.

For example, it is assumed that the subtitle substring is "Hello everyone, thank you for coming to my live streaming room", and the audio substring is "Thank you for coming to my live streaming room". In the subtitle substring, there is a first character having the same pronunciation as the front-end character of the audio substring, such as "Thank you", and there is a second character having the same pronunciation as the back-end character of the audio substring, such as "streaming room". The string composed of the first character, the second character, and the character between the first character and the second character is "Thank you for coming to my live streaming room". The audio substring "Thank you for coming to my live streaming room" may be replaced with the string "Thank you for coming to my live streaming room" extracted from the subtitle substring.

In some embodiments, it is considered that when recognizing the subtitle of the video file based on the optical character recognition technology, some art words or special fonts in the subtitle may have recognition errors. That is, the subtitle substring or the string extracted from the subtitle substring may also have wrongly recognized characters, but these wrongly recognized characters may be correct in the audio substring. In this case, if the audio substring is directly replaced with the subtitle substring or the string extracted from the subtitle substring, the audio substring may be modified incorrectly. For example, it is assumed that:

the subtitle substring is: so dry I only stay here for three days

the speech substring is: so that I only stay here for three days

In the above two substrings, compared with "so that" in the audio substring, "so dry" in the subtitle substring is obviously wrong, and "so that" in the audio substring is correct. If the audio substring is directly replaced with the subtitle substring, the character in the audio substring will be modified wrongly.

In order to solve the above problem, processing may be performed in combination with the recognition confidence of each character in the subtitle substring. The recognition confidence represents the confidence corresponding to each character when the subtitle in the video file is recognized as each character in the subtitle substring. The recognition confidence may be an attribute of each character in the subtitle substring obtained based on the optical character recognition technology. In other words, each character in the subtitle substring has recognition confidence. The higher the recognition confidence of a character, the higher the confidence of the character. Based on the above description, the above the audio substring is replaced with the subtitle substring or the string extracted from the subtitle substring may include:

an alternative character corresponding to a low-confidence character is searched for based on a position of the low-confidence character in the string in the audio substring in response to a recognition confidence of the low-confidence character being lower than a confidence threshold in a string used to replace the audio substring;

the low-confidence character is replaced with the alternative character in response to a shape similarity between the low-confidence character and the alternative character exceeding a shape threshold, and/or the low-confidence character has a same pronunciation as the alternative character; and

the audio substring is replaced with a string in which a low-confidence character replacement has been completed.

The alternative character and the low-confidence character may be characters corresponding in position. In other words, in the string used to replace the audio substring, assuming that the kth character from the start position is the low-confidence character, then in the audio substring, the kth character from the start position is the alternative character. K is an integer. For example, it is assumed that:

the subtitle substring is: so dry I only stay here for three days

the speech substring is: so that I only stay here for three days

In the subtitle substring, assuming that the second character "dry" from the start position is the low-confidence character, then in the audio substring, the second character "that" from the start position is the alternative character corresponding to the low-confidence character.

After determining the low-confidence character and the alternative character, it may be determined whether to replace the low-confidence character with the alternative character based on the shape similarity or pronunciation between the low-confidence character and the alternative character. Specifically, the shape similarity between the low-confidence character and the alternative character may be determined from the aspects of the number of strokes, the structure of the Chinese character, the four-corner code, the radical, etc. If the shape similarity between the low-confidence character and the alternative character is high or the pronunciation is similar, it may indicate that the low-confidence character is a wrongly recognized character. At this time, the low-confidence character may be replaced with the alternative character to correct the character in the subtitle substring. After completing the character correction, the audio substring may be replaced with the corrected subtitle substring. In this way, the audio substring is prevented from being wrongly introduced into the subtitle substring, and the reliability of the transcript generation method is improved.

In some embodiments, the audio substring is corrected based on the subtitle substring may include:

if a character in the subtitle substring does not have a same pronunciation as the front-end character and the back-end character of the audio substring, a difference character pair having a difference between the subtitle substring and the audio substring is searched for based on a character correspondence between the subtitle substring and the audio substring; and

in the difference character pair, if the character in the subtitle substring and a character in the audio substring meet a preset condition, the character in the audio substring is replaced with the character in the subtitle substring.

Specifically, in these embodiments, the two substrings cannot be compared based on the length and pronunciation of the subtitle substring and the audio substring, that is, the two substrings have different lengths and different pronunciations of the front-end character and the back-end character. In this case, the edit distance between the subtitle substring and the audio substring may be calculated to find out the difference character pair having a difference between the subtitle substring and the audio substring, and then determine whether the characters in each difference character pair meet the preset condition. The preset condition may include the shape similarity and the pronunciation similarity of the characters. If the characters in the difference character pair meet the preset condition, the character in the audio substring is replaced with the character in the subtitle substring.

That is, in these embodiments, the audio substring is not directly replaced with the subtitle substring, but the difference character pair between the subtitle substring and the audio substring is searched for, and then in the case that the characters in the difference character pair meet the preset condition, the character in the audio substring is replaced with the character in the subtitle substring. In this way, the speech sub-character is corrected to improve the accuracy of the video transcript.

Further, in some embodiments, after the character in the audio substring is replaced with the character in the subtitle substring, the transcript generation method of the present disclosure further includes:

a first audio substring in which no character replacement is performed and a second audio substring in which character replacement is already performed are respectively input into a trained language model, and a first language score of the first audio substring and a second language score of the second audio substring are output by the language model; and

if the second language score is higher than the first language score, the second audio substring is used as the corrected audio substring; if the second language score is not higher than the first language score, the first audio substring is used as the corrected audio substring.

Specifically, the language score is used to evaluate whether the audio substring conforms to the language specification, such as the fluency of the language. The higher the language score, the higher the probability that the audio substring conforms to the language specification. If the second language score is not higher than the first language score, it indicates that the replacement for the audio substring is wrong, that is, the second audio substring in which the character replacement is already performed does not conform to the language specification than the first audio substring in which no character replacement is performed. In this case, the first audio substring may be used as the corrected audio substring. On the contrary, if the second language score is higher than the first language score, it indicates that the replacement for the audio substring is correct, that is, the second audio substring in which the character replacement is already performed conforms to the language specification more than the first audio substring in which no character replacement is performed. In this case, the second audio substring may be used as the corrected audio substring. Based on the language model, the wrong replacement for the audio substring may be corrected, and the correction accuracy may be ensured.

Further, in some embodiments, when the second audio substring is used as the corrected audio substring, the method further includes:

the difference character pair is recorded; and

based on the character correspondence between the subtitle recognition result and the audio recognition result, if a character pair matching the difference character pair is found, a character in the audio recognition result is replaced with a character in the subtitle recognition result.

Briefly, after determining, based on the subtitle substring and the audio substring, the character pair that may have a difference between the subtitle recognition result and the audio recognition result, full-text replacement is performed on the audio recognition result based on the recorded difference character pair. In this way, in other audio substring corrections, there is no need to replace the character pair with the same difference, and the correction workload may be reduced.

In summary, the correction of the audio substring is thus completed. How to add punctuation to the corrected audio substring is described below (it may be seen from the previous pre-processing that the corrected audio substring does not include any punctuation).

In some embodiments, because the audio substring is a string between two target segmentation punctuations, the target segmentation punctuation may be directly added after a corrected audio substring. In addition, the segmentation punctuation (such as a comma) in the audio substring deleted in the pre-processing may be ignored and no longer added. In this way, the problem of the wrong position of the segmentation punctuation caused by the difference in the number of words between the corrected second audio substring and the uncorrected first audio substring may be avoided. For example, it is assumed that:

the uncorrected first audio substring is: I like to eat cakes, biscuits and ice cream

the corrected second audio substring is: I like to eat cheese cakes, biscuits and ice cream

In the first audio substring, the comma is located after the fifth character and the seventh character. After correction, if a comma is added after the fifth character and the seventh character of the second audio substring, the second audio substring becomes: I like to eat cheese, cakes biscuits, and ice cream. Obviously, this is wrong. Therefore, by ignoring the segmentation punctuation, more correction problems may be avoided.

Further, in some embodiments, it is considered that the subtitle substring may be rich in punctuation. For example, a subtitle substring may be expressed as "Don't be confused by this curious way of drinking~~", here, "~~" may increase the semantic information of the string. In view of this, the punctuation of the subtitle substring may be added to the corrected audio substring to make the punctuation of the audio substring richer. However, considering that the punctuation in the subtitle substring will be deleted during the previous pre-processing, in order to retain these punctuations, the subtitle substring before the pre-processing may be saved as an original array string before the pre-processing operations are performed. Furthermore, in the case of the audio substring being replaced with the subtitle substring, if the length of the subtitle substring is the same as the length of the audio substring, and the length of the subtitle substring is greater than a length of the corresponding original array string, and the recognition confidence of the characters in the subtitle substring is higher than the confidence threshold, the audio substring is replaced with the original array string corresponding to the subtitle substring. In this way, the richness of the segmentation punctuation in the corrected audio substring is improved.

Step S14: a corrected audio recognition result is output as a video transcript of the video file.

Before outputting the corrected audio recognition result as the video transcript, it may also be checked whether the corrected audio recognition result includes a preset character, and if so, the preset character is eliminated. In this way, by setting a reasonable preset character, the content of the video transcript may be modified, and the accuracy of the video transcript may be further improved.

In summary, the entire description of the transcript generation method of the present disclosure is completed, and based on the transcript generation method of the present disclosure, a video transcript with high accuracy may be generated. In the technical solutions of some embodiments of the present disclosure, the segmentation punctuation is added in the audio recognition result of the video file, and the audio substring segmented by the target segmentation punctuation is obtained. The subtitle substring located in the same time period as the audio substring is obtained in the subtitle recognition result of the video file based on the timestamp of the audio substring, and the audio substring is corrected based on the subtitle substring. Since the text in the subtitle substring has a high accuracy, the subtitle substring may be used to correct the wrongly recognized homophone, proper noun, idiom, name, etc. in the speech substring, thereby improving the accuracy of the generated video transcript.

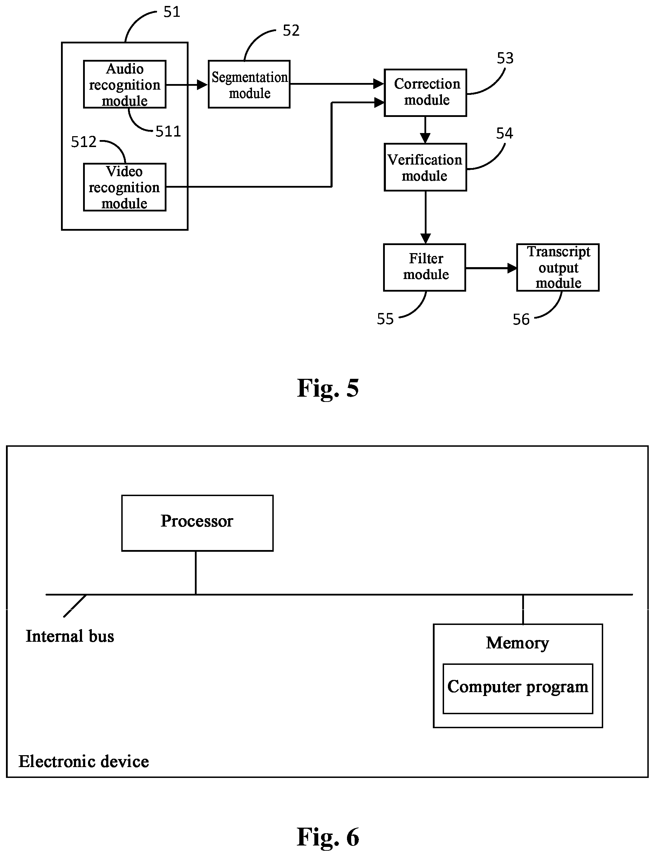

Please refer to Fig. 5, which is a schematic block diagram of a transcript generation system provided by an embodiment of the present disclosure. In Fig. 5, the transcript generation system includes:

a recognition module 51, specifically including an audio recognition module 511 and a video recognition module 512. The audio recognition module 511 is configured to perform audio recognition on a video file to obtain an audio recognition result, and the video recognition module 512 is configured to recognize a subtitle of the video file to obtain a subtitle recognition result;

a segmentation module 52, configured to add a segmentation punctuation in the audio recognition result, and obtain an audio substring segmented by a target segmentation punctuation;

a correction module 53, configured to, for any audio substring, obtain, based on a timestamp of the audio substring, a subtitle substring located in a same time period as the audio substring in the subtitle recognition result, and correct the audio substring based on the subtitle substring; and

a transcript output module 56, configured to output a corrected audio recognition result as a video transcript of the video file.

Further, the transcript generation system may further include a verification module 54 and a filter module 55. The verification module 54 is configured to input a first audio substring in which no character replacement is performed and a second audio substring in which character replacement is already performed respectively into a trained language model, and output, by the language model, a first language score of the first audio substring and a second language score of the second audio substring; use the second audio substring as the corrected audio substring in response to the second language score being higher than the first language score; use the first audio substring as the corrected audio substring in response to the second language score being not higher than the first language score.

The filter module 55 is configured to, before the transcript output module 56 outputs the corrected audio recognition result as the video transcript, check whether the corrected audio recognition result includes a preset character, and eliminate the preset character in response to the corrected audio recognition result comprising the preset character.

Please refer to Fig. 6, which is a schematic diagram of an electronic device provided by an embodiment of the present disclosure. The electronic device includes a processor and a memory, the memory is configured to store a computer program, and when the computer program is executed by the processor, the foregoing method is implemented.

The processor may be a central processing unit (Central Processing Unit, CPU). The processor may also be other general-purpose processor, digital signal processor (Digital Signal Processor, DSP), application specific integrated circuit (Application Specific Integrated Circuit, ASIC), field programmable gate array (Field-Programmable Gate Array, FPGA) or other programmable logic devices, chips such as discrete gate or transistor logic devices, and discrete hardware components, or a combination of the above various types of chips.

As a non-transitory computer-readable storage medium, the memory may be used to store a non-transitory software program, a non-transitory computer executable program and module, such as program instructions/a module corresponding to the method in the embodiments of the present disclosure. The processor executes various functional applications and data processing of the processor by running the non-transitory software program, instructions and module stored in the memory, that is, implementing the method in the above method embodiments.

The memory may include a program storage area and a data storage area, wherein the program storage area may store an application program required by an operating system and at least one function; the data storage area may store data created by the processor, etc. In addition, the memory may include a highspeed random-access memory or a non-transitory memory, such as at least one magnetic disk storage device, flash memory device, or other non-transitory solid-state storage device. In some embodiments, the memory optionally includes memories remotely provided with respect to the processor, and these remote memories may be connected to the processor through a network. Examples of the above network include, but are not limited to, Internet, an intranet, a local area network, a mobile communication network, and a combination of them.

An embodiment of the present disclosure further provides a computer-readable storage medium, the computer-readable storage medium is used to store a computer program, and when the computer program is executed by a processor, the foregoing method is implemented.

Although the embodiments of the present disclosure are described in combination with the drawings, those skilled in the art may make various modifications and variations without departing from the spirit and scope of the present disclosure, and such modifications and variations are all within the scope defined by the appended claims.

**Claims**

1. A transcript generation method, comprising:

performing audio recognition on a video file to obtain an audio recognition result, and recognizing a subtitle of the video file to obtain a subtitle recognition result;
adding a segmentation punctuation in the audio recognition result, and obtaining an audio substring segmented by a target segmentation punctuation;
for any audio substring, obtaining, based on a timestamp of the audio substring, a subtitle substring located in a same time period as the audio substring in the subtitle recognition result, and correcting the audio substring based on the subtitle substring; and
outputting a corrected audio recognition result as a video transcript of the video file.

2. The method of claim 1, wherein the subtitle recognition result comprises subtitle arrays recognized from the video file at a plurality of time points; and
obtaining the subtitle substring located in the same time period as the audio substring in the subtitle recognition result comprises:

extracting, from the subtitle recognition result, a target subtitle array located in the same time period as the audio substring; and
combining the target subtitle array into different array strings, and using an array string having a maximum similarity with the audio substring as the subtitle substring.

3. The method of claim 2, wherein the audio substring and the subtitle arrays have timestamps, and a timestamp of the audio substring comprises a minimum timestamp and a maximum timestamp; and
extracting, from the subtitle recognition result, the target subtitle array located in the same time period as the audio substring comprises:

determining a first timestamp less than the minimum timestamp and a second timestamp greater than the maximum timestamp; and
extracting, from the subtitle recognition result, a subtitle array with a timestamp between the first timestamp and the second timestamp, and using the subtitle array as the target subtitle array.

4. The method of claim 1, wherein correcting the audio substring based on the subtitle substring comprises:
replacing the audio substring with the subtitle substring in response to a length of the subtitle substring being the same as a length of the audio substring, a front-end character of the subtitle substring having a same pronunciation as a front-end character of the audio substring, and a back-end character of the subtitle substring having a same pronunciation as a back-end character of the audio substring, wherein the same pronunciation means that a similarity between character pronunciations exceeds a pronunciation threshold.

5. The method of claim 4, wherein correcting the audio substring based on the subtitle substring comprises:
replacing the audio substring with a string composed of a first character, a second character and a character between the first character and the second character in response to the length of the subtitle substring being greater than the length of the audio substring, and in the subtitle substring, a first character having a same pronunciation as the front-end character of the audio substring existing, and a second character having a same pronunciation as the back-end character of the audio substring existing.

6. The method of claim 4 or 5, wherein a character in the subtitle substring has a recognition confidence; and replacing the audio substring comprises:

searching for, in the audio substring, an alternative character corresponding to a low-confidence character based on a position of the low-confidence character in the string in response to a recognition confidence of the low-confidence character being lower than a confidence threshold in a string used to replace the audio substring;
replacing the low-confidence character with the alternative character in response to a shape similarity between the low-confidence character and the alternative character exceeding a shape threshold, and/or the low-confidence character having a same pronunciation as the alternative character; and
replacing the audio substring with a string that has completed a low-confidence character replacement.

7. The method of claim 4 or 5, wherein correcting the audio substring based on the subtitle substring comprises:

searching for, based on a character correspondence between the subtitle substring and the audio substring, a difference character pair having a difference between the subtitle substring and the audio substring in response to a character in the subtitle substring not having the same pronunciation as the front-end character or the back-end character of the audio substring; and
replacing a character in the audio substring with the character in the subtitle substring in response to, in the difference character pair, the character in the subtitle substring and the character in the audio substring meeting a preset condition.

8. The method of claim 7, wherein after replacing the character in the audio substring with the character in the subtitle substring, the method further comprises:

inputting a first audio substring in which no character replacement is performed and a second audio substring in which character replacement is already performed respectively into a trained language model , and outputting, by the language model, a first language score of the first audio substring and a second language score of the second audio substring; and

using the second audio substring as a corrected audio substring in response to the second language score being higher than the first language score; using the first audio substring as the corrected audio substring in response to the second language score being not higher than the first language score.

9. The method of claim 8, wherein in response to using the second audio substring as the corrected audio substring, the method further comprises:

recording the difference character pair; and

based on a character correspondence between the subtitle recognition result and the audio recognition result, replacing a character in the audio recognition result with a character in the subtitle recognition result in response to a character pair matching the difference character pair being found.

10. The method of claim 4 or 5, wherein before correcting the audio substring, the method further comprises:
performing pre-processing operations on the subtitle substring and the audio substring:

deleting a segmentation punctuation in response to the subtitle substring and the audio substring comprise the segmentation punctuation; and/or

deleting a non-Chinese and non-English character in response to the subtitle substring and the audio substring comprise the non-Chinese and non-English character; and/or

converting a digital character in the subtitle substring.

11. The method of claim 10, wherein a character in the subtitle substring has a recognition confidence; and before performing the pre-processing operations, the method further comprises:

saving the subtitle substring before the pre-processing operations as an original array string; and

replacing the audio substring with the subtitle substring comprises:

replacing the audio substring with the original array string corresponding to the subtitle substring in response to the length of the subtitle substring being the same the length of the audio substring, the length of the subtitle substring being greater than a length of a corresponding original array string, and recognition confidences of characters in the subtitle substring being all higher than a confidence threshold.

12. The method of claim 1, wherein after completing correction of the audio substring, the method further comprises:
adding the target segmentation punctuation after a corrected audio substring.

13. The method of claim 1, wherein before outputting the corrected audio recognition result as the video transcript, the method further comprises:
checking whether the corrected audio recognition result comprises a preset character, and eliminating the preset character in response to the corrected audio recognition result comprising the preset character.

14. A transcript generation system, comprising:

a recognition module, configured to perform audio recognition on a video file to obtain an audio recognition result, and recognize a subtitle of the video file to obtain a subtitle recognition result;

a segmentation module, configured to add a segmentation punctuation in the audio recognition result, and obtain an audio substring segmented by a target segmentation punctuation;

a correction module, configured to, for any audio substring, obtain, based on a timestamp of the audio substring, a subtitle substring located in a same time period as the audio substring in the subtitle recognition result, and correct the audio substring based on the subtitle substring; and

a transcript output module, configured to output a corrected audio recognition result as a video transcript of the video file.

15. A computer-readable storage medium, wherein the computer-readable storage medium is configured to store a computer program, and the computer program, when executed by a processor, implements the method of any of claims 1 to 13.

16. An electronic device, comprising a processor and a memory, wherein the memory is configured to store a computer program, and the computer program, when executed by the processor, implements the method of any of claims 1 to 13.

S11

Perform audio recognition on a video file to obtain an audio recognition result, and recognize a subtitle of the video file to obtain a subtitle recognition result

S12

Add a segmentation punctuation in the audio recognition result, and obtain an audio substring segmented by a target segmentation punctuation

S13

For any audio substring, obtain, based on a timestamp of the audio substring, a subtitle substring located in a same time period as the audio substring in the subtitle recognition result, and correct the audio substring based on the subtitle substring

S14

Output a corrected audio recognition result as a video transcript of the video file

**Fig. 1**

Hello
everyone

Thank you for
coming to my
live streaming
room

## Fig. 2

Hello
everyone

→

Hello
everyone

Thank you for
coming to my
live streaming
room

→

Thank you for
coming to my
live streaming
room

→

Thank you for
coming to my
live streaming
room

## Fig. 3

S41

Extract, from the subtitle recognition result,
a target subtitle array located in the same time
period as the audio substring

S42

Combine the target subtitle array into different
array strings, and use an array string having a
maximum similarity with the audio substring as
the subtitle substring

## Fig. 4

Audio
recognition
module

511

module

Correction
module

Verification
module

512

Video
recognition
module

Filter
module

module

56

**Fig. 5**

Processor

Internal bus

Memory

Computer program

Electronic device

**Fig. 6**

## INTERNATIONAL SEARCH REPORT

| International application No. |
| --- |
| **PCT/CN2024/114000** |

| A. | CLASSIFICATION OF SUBJECT MATTER |
| --- | --- |

H04N21/439(2011.01)i

According to International Patent Classification (IPC) or to both national classification and IPC

| B. | FIELDS SEARCHED |
| --- | --- |

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNTXT; CNABS; VEN; ENTXTC; ENTXT; WPABS; WPABSC; CSDN; CNKI: 音频, 语音, 字幕, 文本, 识别, 片段, 分片, 分割, 校正, 纠正, 修正, audio, voice, sound, subtitle, caption, identify, section, fragment, cut, correct

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 111968649 A (TENCENT TECHNOLOGY (SHENZHEN) CO., LTD.) 20 November 2020 (2020-11-20)<br>description, paragraphs 62-201, and figure 3 | 1-6, 10-16 |
| Y | CN 116524906 A (AISPEECH CO., LTD.) 01 August 2023 (2023-08-01)<br>description, paragraphs [0009]-[0013] | 1-6, 10-16 |
| A | US 2021280168 A1 (TOSHIBA K. K.) 09 September 2021 (2021-09-09)<br>entire document | 1-16 |

☐ Further documents are listed in the continuation of Box C.      ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **19 November 2024** | **20 November 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/114000**

| Patent document cited in search report | | | Publication date (day/month/year) | Patent family member(s) | | | Publication date (day/month/year) |
|---|---|---|---|---|---|---|---|
| CN | 111968649 | A | 20 November 2020 | None | | | |
| CN | 116524906 | A | 01 August 2023 | None | | | |
| US | 2021280168 | A1 | 09 September 2021 | US | 11620981 | B2 | 04 April 2023 |
| | | | | JP | 2021139994 | A | 16 September 2021 |
| | | | | JP | 7111758 | B2 | 02 August 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311183290